# EUROPEAN PATENT APPLICATION

(11) **EP 4 681 957 A1**
(43) Date of publication of application: **21.01.2026**
(21) Application number: 24774798.3
(22) Date of filing: 13.03.2024
(51) Int. Cl.: B60K 35/00

(54) **INFORMATION DISPLAY SYSTEM, IMAGE DISPLAY METHOD, COMPUTER PROGRAM, AND WORK VEHICLE**

(30) Priority: 17.03.2023 JP 2023042616
(71) Applicant: Kubota Corporation, Osaka 556-8601 (JP)
(72) Inventor: HASHIMOTO, Ryo, Sakai-shi, Osaka 590-0908 (JP); KADOTA, Dai, Sakai-shi, Osaka 590-0908 (JP)
(74) Representative: Cabinet Beau de Loménie
(86) International application number: PCT/JP2024/009843
(87) International publication number: WO 2024/195660

(57) **Abstract**

An information display system for a work vehicle includes a meter panel unit including a display element and a control device configured to control the meter panel unit. The display element includes a display region including a primary region to display a primary image indicating main information related to the work vehicle, and a sub-region to display a plurality of content including information related to the work vehicle. The plurality of content is composed of a plurality of pages that can be advanced or returned by a user operation, and the control device causes one of the plurality of pages selected by the user to be displayed in the sub-region while displaying the primary image in the primary region.

## Description

### TECHNICAL FIELD

The present disclosure relates to information display systems, image display methods, computer programs, and work vehicles.

### BACKGROUND ART

Research and development of smart agriculture that uses information and communication technology (ICT) and the Internet of Things (IoT), as the next-generation agriculture, is under way. Automated and unmanned operations of agricultural machines such as tractors used in fields have been studied and developed. For example, work vehicles that travel while performing automatic steering, using a positioning system such as a global navigation satellite system (GNSS) that can perform precise positioning, have been put into practice.

A meter panel unit that displays and notifies an operator of a travel speed, the load state of an engine, and the state of each portion of a work vehicle is provided in front of the operator's seat of an agricultural work vehicle such as a tractor.

Patent Document 1 describes a commonly used meter unit for passenger cars.

### CITATION LIST

### PATENT LITERATURE

Patent Document No. 1: Japanese Laid-Open Patent Publication No. 2012-32209

### SUMMARY OF INVENTION

### TECHNICAL PROBLEM

A meter panel provided in an agricultural machine such as a tractor is required to accurately notify the operator of various kinds of information about the vehicle when the vehicle is traveling or working. In addition, it is necessary to display more kinds of information in order to allow such an agricultural machine to perform various kinds of works outdoors compared to general passenger cars. In the case in which an agricultural machine is used in smart agriculture, even more kinds of information need to be displayed. However, as the amount of information displayed on the meter panel increases, visibility decreases, and therefore, it is more difficult for the operator to obtain necessary information.

There is an increased demand for such a meter panel not only for agricultural machines but also for construction machines that are used in work in construction sites. Agricultural machines and construction machines that can travel are hereinafter collectively referred to as "work vehicles."

The present disclosure provides information display systems that can solve such a problem, work vehicles including such information display systems, and display methods to display images.

### SOLUTION TO PROBLEM

The present disclosure provides solutions described in the following aspects.

### [Item A1]

An information display system for a work vehicle, comprising:
a meter panel unit including a display element; and
a control device configured to control the meter panel unit,
   wherein
the display element includes a display region including a primary region to display a primary image indicating main information related to the work vehicle, and a sub-region to display a plurality of content including information related to the work vehicle,
the plurality of content is composed of a plurality of pages that can be advanced or returned by a user operation, and
the control device causes one of the plurality of pages selected by the user to be displayed in the sub-region while displaying the primary image in the primary region.

### [Item A2]

The information display system of Item A1, wherein the primary region is positioned in an upper portion of the display region, and the sub-region is positioned in a lower portion of the display region.

### [Item A3]

The information display system of Item A1 or A2, wherein the control device causes the primary image and images of the plurality of content to be displayed in a foreground.

### [Item A4]

The information display system of any one of Items A1 to A3, wherein the main information includes information indicating a direction of travel, a transmission state, and a vehicle speed of the work vehicle.

### [Item A5]

The information display system of any one of Items A1 to A4, wherein the plurality of content includes a menu image displaying various items, a setting image to set various items included in the menu image, a launch image displaying a list of functional items, a camera image, an image to perform audio settings, and an image to perform radio settings.

### [Item A6]

The information display system of any one of Items A1 to A5, wherein the meter panel unit includes first and second analog meters each including a pointer, and the display element is provided between the first and second analog meters.

### [Item A7]

A work vehicle comprising the information display system of any one of Items A1 to A6.

### [Item A8]

A computer-implemented display method to display an image on a display element of a meter panel unit for a work vehicle, wherein the display element includes a display region including a primary region to display a primary image indicating main information related to a work vehicle, and a sub-region to display a plurality of content including information related to the work vehicle, and the plurality of content is composed of a plurality of pages that can be advanced or returned by a user operation, the method comprising:
displaying the primary image in the primary region; and
displaying one of the plurality of pages selected by the user in the sub-region while displaying the primary image in the primary region.

### [Item A9]

A computer program executable by a computer to cause a display element of a meter panel unit for a work vehicle to display an image, wherein the display element includes a display region including a primary region to display a primary image indicating main information related to a work vehicle, and a sub-region to display a plurality of content including information related to the work vehicle, and the plurality of content is composed of a plurality of pages that can be advanced or returned by a user operation, the computer program causing the computer to perform:
causing the primary image to be displayed in the primary region; and
causing one of the plurality of pages selected by the user to be displayed in the sub-region while displaying the primary image in the primary region.

### [Item B1]

An information display system for a work vehicle, comprising:
a meter panel unit including a display element; and
a control device configured to control the meter panel unit,
   wherein
the display element includes a display region including a primary region to display a primary image indicating main information related to the work vehicle, and a sub-region to display a plurality of content including information related to the work vehicle,
the plurality of content is composed of a plurality of pages that can be advanced or returned by a user operation, and includes first-type content and second-type content, and
the control device:
   when causing the first-type content selected by the user to be displayed in the sub-region, causes the primary image to be displayed in the primary region and the first-type content to be displayed in the sub-region with the primary region having a first size and the sub-region having a second size, and
   when causing the second-type content selected by the user to be displayed in the sub-region, causes the primary image to be displayed in the primary region and the second-type content to be displayed in the sub-region with the primary region having a third size that is smaller than the first size and the sub-region having a fourth size that is larger than the second size.

### [Item B2]

The information display system of Item B1, wherein the control device changes a size of the primary region from the first size to the third size, or changes a size of the primary region from the third size to the first size, while maintaining content included in the primary image.

### [Item B3]

The information display system of Item B1 or B2, wherein the second-type content includes a menu image displaying various items, a setting image for setting various items included in the menu image, a launch image displaying a list of functional items, a camera image, an image to perform audio settings, an image to perform front loader control, an image to perform cylinder flow control, an image to set operation members, an image to perform steering assist control, an image to perform automatic steering control, an image to perform attachment work machine control, and an image to perform radio settings.

### [Item B4]

The information display system of any one of Items B1 to B3, wherein the control device causes the primary image and images of the plurality of content to be displayed in a foreground.

### [Item B5]

The information display system of any one of Items B1 to B4, wherein the main information includes information indicating a direction of travel, a transmission state, and a vehicle speed of the work vehicle.

### [Item B6]

The information display system of any one of Items B1 to B5, wherein the meter panel unit includes first and second analog meters each including a pointer, and the display element is provided between the first and second analog meters.

### [Item B7]

A work vehicle comprising:
the information display system of any one of Items B1 to B6.

### [Item B8]

A computer-implemented display method to display an image on a display element of a meter panel unit for a work vehicle, wherein the display element includes a display region including a primary region to display a primary image indicating main information related to a work vehicle, and a sub-region to display a plurality of content including information related to the work vehicle, and the plurality of content is composed of a plurality of pages that can be advanced or returned by a user operation, and includes first-type content and second-type content, the method comprising:
when displaying the first-type content selected by the user in the sub-region, displaying the primary image in the primary region and displaying the first-type content in the sub-region with the primary region having a first size and the sub-region having a second size; and
when displaying the second-type content selected by the user in the sub-region, displaying the primary image in the primary region and displaying the second-type content in the sub-region with the primary region having a third size smaller than the first size and the sub-region having a fourth size larger than the second size.

### [Item B9]

A computer program executable by a computer to cause a display element of a meter panel unit for a work vehicle to display an image, wherein the display element includes a display region including a primary region to display a primary image indicating main information related to a work vehicle, and a sub-region to display a plurality of content including information related to the work vehicle, and the plurality of content is composed of a plurality of pages that can be advanced or returned by a user operation, and includes first-type content and second-type content, the computer program causing the computer to perform:
when displaying the first-type content selected by the user in the sub-region, causing the primary image to be displayed in the primary region and causing the first-type content to be displayed in the sub-region with the primary region having a first size and the sub-region having a second size; and
when displaying the second-type content selected by the user in the sub-region, causing the primary image to be displayed in the primary region and causing the second-type content to be displayed in the sub-region with the primary region having a third size smaller than the first size and the sub-region having a fourth size larger than the second size.

General or specific aspects of the present disclosure may be implemented using a device, system, method, integrated circuit, computer program, non-transitory computer-readable storage medium, or any combination thereof. The computer-readable storage medium may be inclusive of volatile and non-volatile storage media. A device may include a plurality of devices. In the case in which a device includes two or more devices, the two or more devices may be provided in a single apparatus, or separately arranged in two or more different apparatuses.

### ADVANTAGEOUS EFFECTS OF INVENTION

According to embodiments of the present disclosure, information display systems each capable of displaying various kinds of information required during agricultural work with high visibility, work vehicles including such information display systems, and display methods to display images are provided.

### BRIEF DESCRIPTION OF DRAWINGS

FIG. **1A** is a side view schematically illustrating an example work vehicle according to an embodiment of the present disclosure.
FIG. **1B** is a front view schematically illustrating a meter panel unit when attached behind a steering wheel positioned in front of an operator's seat of a work vehicle, in an embodiment of the present disclosure.
FIG. **2** is a front view illustrating an example arrangement of main components of the meter panel unit of this embodiment.
FIG. **3** is a perspective view illustrating an example configuration of a wall surface portion of the meter panel unit of this embodiment.
FIG. **4** is a perspective view illustrating an example configuration of a transparent cover of the meter panel unit of this embodiment.
FIG. **5** is a front view illustrating an example arrangement of indicators of the meter panel unit of this embodiment.
FIG. **6** is a front view illustrating an example state in which various kinds of information are displayed on a display element of the meter panel unit of this embodiment.
FIG. **7** is a perspective view of an analog meter in the meter panel unit of this embodiment.
FIG. **8** is a front view illustrating a positional relationship between a first analog meter, an arc-shaped indicator, and a facing plate.
FIG. **9** is a front view illustrating an example configuration of an arc-shaped indicator.
FIG. **10** is a front view illustrating a second analog meter and a second arc-shaped indicator.
FIG. **11** is a block diagram schematically illustrating an example configuration of an information display system in an embodiment of the present disclosure.
FIG. **12** is a block diagram illustrating an example hardware configuration of a control device.
FIG. **13** is a front view schematically illustrating an example in which an arc having the same color as that of light emitted from a light emitting region of an arc-shaped indicator is displayed.
FIG. **14** is a front view schematically illustrating an example in which an arc having the same color as that of light emitted from a light emitting region of an arc-shaped indicator, and a second object having another shape and having an arc having the same color, are displayed.
FIG. **15** is a diagram illustrating an example of a home screen.
FIG. **16** is a diagram schematically illustrating an example of segmentation of a display region.
FIG. **17** is a schematic diagram illustrating an example of a home screen in which a primary region and a performance monitor region are displayed.
FIG. **18** is a diagram schematically illustrating an example of a menu image.
FIG. **19** is a diagram schematically illustrating an example of a setting image.
FIG. **20** is a diagram schematically illustrating an example of a launch image.
FIG. **21** is a diagram schematically illustrating an example of a radio image to perform radio settings.
FIG. **22** is a diagram schematically illustrating an example of a camera image.
FIG. **23** is a flowchart illustrating a procedure for changing sizes of a primary region and a sub-region according to a type of content to be displayed in the sub-region.

### DESCRIPTION OF EMBODIMENTS

Meter panel units according to embodiments of the present disclosure will be described below with reference to the accompanying drawings. It should be noted that like reference signs refer to like parts throughout the several views.

The embodiments described below are exemplified to embody technical ideas of the present invention, and the present invention is not limited to the following. Furthermore, the descriptions of sizes, materials, shapes, relative arrangements, and the like of components are not intended to limit the scope of the present invention thereto but intended to be illustrative. The size and positional relationship of members illustrated in the drawings may be exaggerated to facilitate understanding.

As used herein, the term "parallel" with respect to two straight lines, sides, surfaces, or the like is intended to encompass some angular deviations from absolute parallelism between the two straight lines, sides, surfaces, or the like that are in the range of 0 to 5° unless otherwise specified. As used herein, the term "perpendicular" or "orthogonal" with respect to two straight lines, sides, surfaces, or the like is intended to encompass some angular deviations from absolute perpendicularity or orthogonality (90°) between the two straight lines, sides, surfaces, or the like that are in the range of ±5° unless otherwise specified. The angle between two straight lines, sides, surfaces, or the like has a positive value, but not a negative value, unless otherwise specified.

### <Overall configuration of work vehicle>

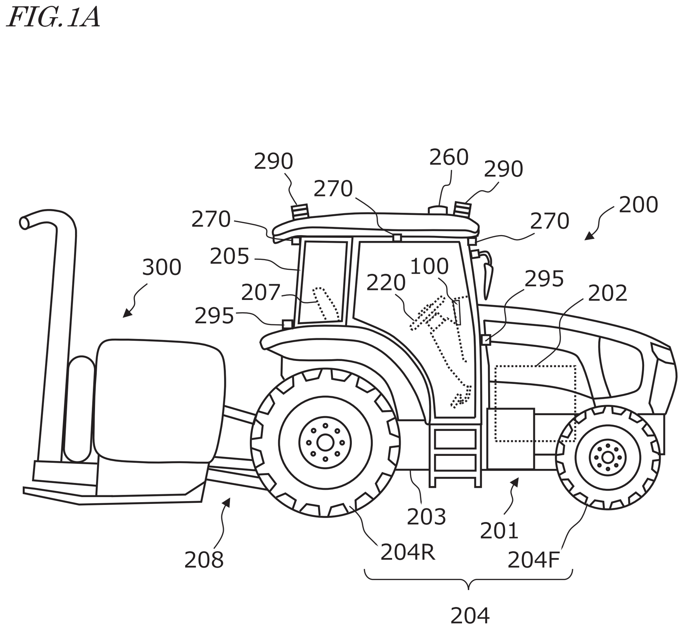

FIG. **1A** is a side view schematically illustrating an example work vehicle **200** according to this embodiment. The illustrated work vehicle **200** is a tractor that tows an implement (replaceable work equipment) **300.**

The work vehicle **200** of FIG. **1A** includes a vehicle body **201,** a prime mover (engine) **202,** and a transmission **203.** The vehicle body **201** is provided with a travel device including tire-mounted wheels **204,** and a cabin **205.** The travel device includes four wheels **204,** axles for rotating the four wheels, and brakes for slowing or stopping the axles. The wheels **204** of this example include a pair of front wheels **204F** and a pair of rear wheels **204R.** One or both of the front wheel **204F** and the rear wheel **204R** may be replaced by a plurality of wheels to which a continuous track is attached (crawler) instead of a tire-mounted wheel.

In the cabin **205,** a meter panel unit **100** according to an embodiment of the present disclosure, an operator's seat **207,** a steering wheel **220,** and switches for operations are provided.

The work vehicle **200** of FIG. **1A** is provided with a plurality of external sensors to sense surroundings of the work vehicle **200.** The external sensors may include various kinds of sensors such as a plurality of cameras **270,** a plurality of obstacle sensors **295,** and a plurality of LiDAR sensors **290.** The cameras **270** may, for example, be provided on the front, rear, left, and right sides of the work vehicle **200.** Each camera **270** captures an image of an environment around the work vehicle **200,** and generates image data. Images obtained by the cameras **270** may, for example, be transmitted to a terminal device for remote monitoring. The cameras **270** are optionally provided, and the number thereof is not particularly limited. The LiDAR sensor **290** is an example external sensor to output sensor data indicating a distribution of objects present in an environment around the work vehicle **200.** In the example of FIG. **1A****,** two LiDAR sensors **290** are provided at an upper front portion and an upper rear portion of the cabin 205. The LiDAR sensors **290** may be provided at other positions (e.g., a lower portion of a front surface of the vehicle body **201).** Each LiDAR sensor **290** repeatedly outputs sensor data indicating distances to and directions of measurement points of objects existing in a surrounding environment, or the three-dimensional coordinate values of the measurement points, while the work vehicle **200** is traveling. The number of LiDAR sensors **290** is not limited to two and may be one or at least three. In the example of FIG. **1A****,** the plurality of obstacle sensors **295** are provided at a front portion and a rear portion of the cabin **205.** The obstacle sensors **295** may be positioned at other positions. The obstacle sensors **295** may include a laser scanner or ultrasonic sonar, for example.

The work vehicle **200** further includes a GNSS unit **260.** GNSS collectively refers to satellite-based positioning systems, such as the global positioning system (GPS), the quasi-zenith satellite system (QZSS, for example, Michibiki), GLONASS, Galileo, and BeiDou. The GNSS unit **260** receives satellite signals transmitted from a plurality of GNSS satellites (also referred to as GNSS signals), and performs positioning based on the satellite signals. The GNSS unit **260** is provided at an upper portion of the cabin **205,** but the GNSS unit **260** may be provided at other positions.

The engine **202** may, for example, be a diesel engine. An electric motor may be used instead of a diesel engine. The transmission **203** is capable of changing the propelling force and movement speed of the work vehicle **200** by changing gear ratios. The transmission **203** is also capable of allowing the work vehicle **200** to switch between forward movement and rearward movement.

A connecting device **208** is provided at a rear portion of the vehicle body **201.** The connecting device **208** includes, for example, a three-point support device (also referred to as a "three-point linkage" or "three-point hitch"), a power take-off (PTO) shaft, a universal joint, and a communication cable. The connecting device **208** can be used to removably connect an implement **300** to the work vehicle **200.** The connecting device **208** can change the position or orientation of the implement **300** by raising or lowering the three-point linkage using, for example, a hydraulic device. In addition, power can be transmitted from the work vehicle **200** to the implement **300** through the universal joint. While towing the implement **300,** the work vehicle **200** allows the implement **300** to perform predetermined work. A connecting device may also be provided at a front portion of the vehicle body **201.** In that case, an implement can be connected in front of the work vehicle **200.**

Although the implement **300** of FIG. **1A** is, for example, a sprayer for spraying a chemical agent to crops, the implement **300** is not limited to sprayers. For example, any kind of implement **300** such as a mower, seeder, spreader, rake, baler, harvester, plough, harrow, or rotary tiller may be connected to the work vehicle **200** for use.

Thus, the work vehicle **200,** which is used in smart agriculture, is equipped with various sensors, and performs various kinds of work together with the implement **300.** During such work, it is necessary to give the operator (or user) various kinds of information about a travel state and a work state. Therefore, information that should be displayed on the meter panel unit **100** may significantly vary depending on the kind and phase of work.

It should be noted that the work vehicle **200,** such as a tractor, may be configured to travel by manual driving, automatic steering, or automatic driving.

### <Overall configuration of meter panel unit>

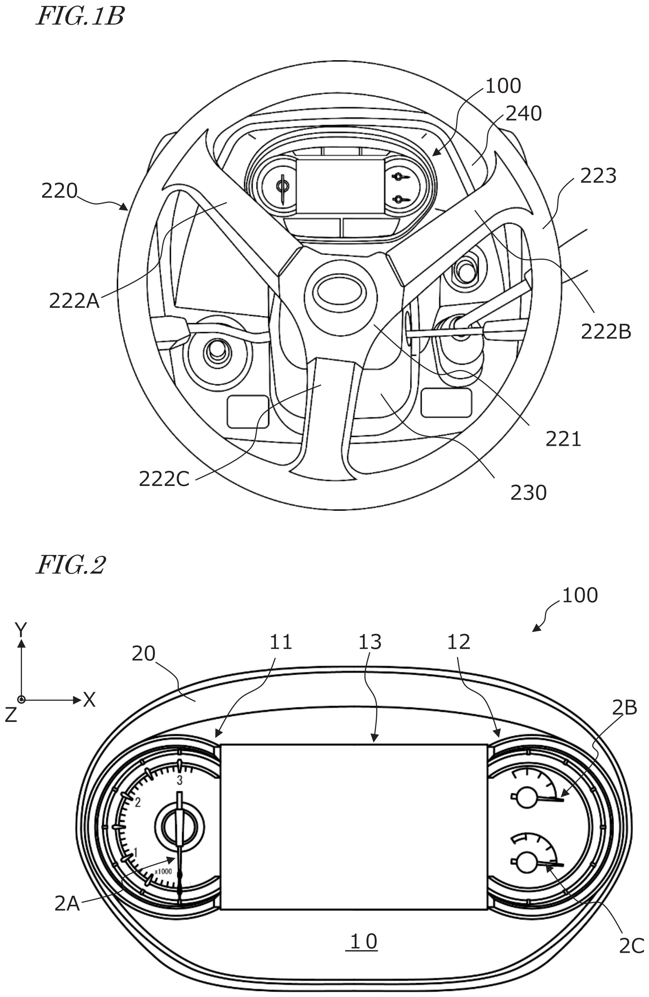

FIG. **1B** is a front view schematically illustrating the meter panel unit **100** when the meter panel unit **100** is attached to a tractor, which is an example work vehicle, in an embodiment of the present disclosure. In the example illustrated in FIG. **1B****,** the meter panel unit **100** is positioned on the front side of the operator's seat of the tractor. Specifically, the meter panel unit **100** is positioned above a steering column (steering wheel stay) **230** that supports the steering wheel **220** in a manner that allows the steering wheel **220** to rotate, and is fitted into an opening of a meter cover **240.** In this example, the steering wheel **220** has a central hub (horn cover) **221,** three spokes **222A, 222B,** and **222C** radially extending from the horn cover **221,** and a rim **223** supported by the spokes **222A, 222B,** and **222C.** The meter panel unit **100** is provided at a position that allows the operator sitting on the operator's seat to see the meter panel unit **100.** In the example of FIG. **1B****,** various kinds of information displayed on the meter panel unit **100** can be seen through an opening between the spokes **222A** and **222B.**

The meter panel unit **100** is required to have excellent visibility. In particular, in the case of movable work vehicles capable of performing automatic steering or automatic driving, various kinds of information that are not displayed on general passenger cars need to be displayed during various kinds of agricultural work. For the meter panel unit **100,** having such a feature, the visibility is preferably improved so as to avoid overlooking more important information of various kinds of information. In addition, in the case in which the meter panel unit **100** is mounted on various work vehicles, it is desirable that the meter panel unit **100** have a structure that allows easy attachment. As described below, the meter panel unit **100** of this embodiment has excellent visibility and is easy to attach.

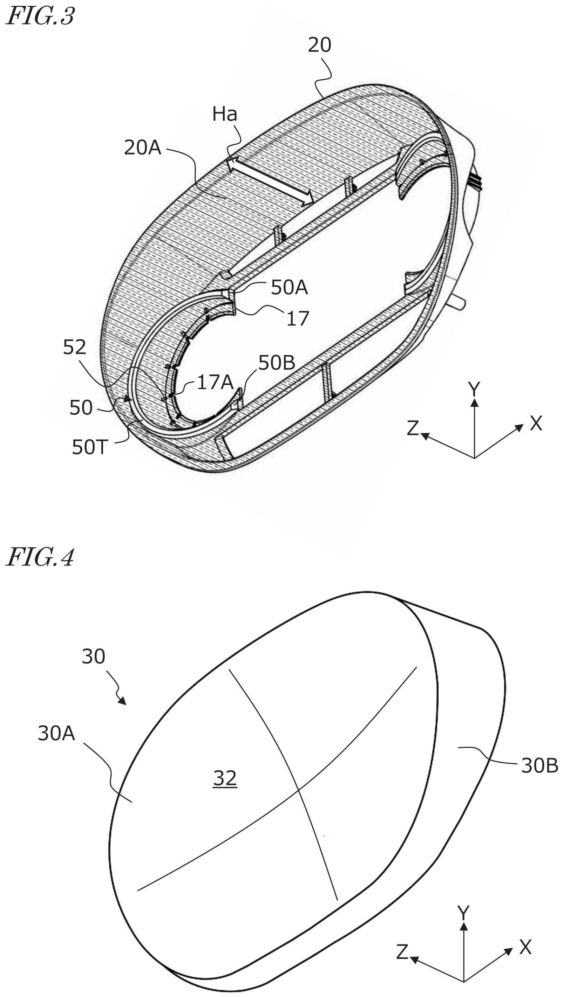

An overall configuration of the meter panel unit **100** will be described below with reference to FIGS. **2****,** **3****,** and **4****.** FIG. **2** is a front view illustrating an example arrangement of main components of the meter panel unit **100** of this embodiment. FIG. **3** is a perspective view illustrating an example configuration of a wall surface portion described below of the meter panel unit **100.** FIG. **4** is a perspective view illustrating an example configuration of a transparent cover described below of the meter panel unit **100.** These drawings illustrate an X-axis, a Y-axis, and a Z-axis that are orthogonal to one another for reference (right-handed coordinate system). In the present description, the positive direction of the Y axis is also referred to as "upward," and the negative direction thereof is also referred to as "downward." The positive direction of the X axis is also referred to as "rightward," and the negative direction thereof is also referred to as "leftward." The positive direction of the Z axis is also referred to as "forward," and the negative direction thereof is also referred to as "backward."

As illustrated in FIG. **2****,** the meter panel unit **100** includes a meter portion **10** including a first analog meter **11,** a second analog meter **12,** and a display element **13** provided between the first and second analog meters **11** and **12.** In the present description, a portion of the meter portion **10** of FIG. **2** that displays information is also referred to as a display surface side of the meter portion **10.**

The first analog meter **11** includes a pointer **2A,** and the second analog meter **12** has pointers **2B** and **2C.** The pointer **2A** is supported in a manner that allows the pointer **2A** to revolve around the axis of rotation positioned near the center of the first analog meter **11.** The pointer **2A** indicates the engine speed by the direction in which the tip of the pointer **2A** is oriented, for example. Here, "engine speed" means the number of revolutions of the engine per unit time (for example, one minute). The pointers **2B** and **2C** are supported in a manner that allows the pointers **2B** and **2C** to revolve around the respective axes of rotation located at different positions of the second analog meter **12.** The pointer **2B** indicates the remaining amount of fuel by the direction in which the tip of the pointer **2B** is oriented. The pointer **2C** indicates the temperature (water temperature) of engine-cooling water by the direction in which the tip of the pointer **2C** is oriented, for example. The pointers **2A, 2B,** and **2C** are driven by a drive part (movement) included in the meter portion **10.** The drive part receives an electrical signal indicating a sensor output such as the engine speed, the remaining amount of fuel, or the water temperature, and converts the electrical signal into mechanical movements for changing the orientations of the pointers **2A, 2B,** and **2C.** The drive part for each pointer **2A, 2B, 2C** includes an actuator such as a stepping motor.

The display element **13** is a digital meter rather than an analog meter. The display element **13** is, for example, an active matrix display, such as a liquid crystal display panel or an organic light emitting diode (OLED). In the following description, as an example, it is assumed that the display element **13** is a liquid crystal display (LCD). The display element **13** has a large number of pixels two-dimensionally arranged in a display region, and provides display visible to the human eye by emitting light from the large number of pixels. In this embodiment, each pixel of the display element **13** includes R, G, and B subpixels, and therefore, the display element **13** is capable of displaying color images. Unlike analog meters, the display element **13** is capable of displaying numerals, letters, graphics, icons, symbols, still images, or moving images having any appropriate sizes at any appropriate positions in the display region. Strictly speaking, numerals, letters, graphics, icons, and symbols are a part of images (still images or moving images) displayed in the display region by the display element **13.** The display element **13** is also capable of apparently displaying an image similar to all or a portion of an analog meter having a pointer. In the case in which the display element **13** displays an image of an "analog meter," a "pointer" in the image can be turned in any appropriate direction as a portion of moving images, by changing images on a frame-by-frame basis. It should be noted that in the case in which the work vehicle is an electric vehicle that is driven by a battery, the display of the engine speed, the remaining amount of fuel, and the water temperature may, for example, be replaced by the display of a motor output, the state of charge of the battery, and the temperature of the battery, respectively.

The "analog meter" displayed by a display device such as the display element **13** is different from the first analog meter **11** and the second analog meter **12** in that the former is two-dimensional and the latter is three-dimensional. In addition, whereas the shape, color, and size of the pointer and scales of the former analog meter are changeable, it is difficult to change those of the latter. Furthermore, the visibility of the former depends on the contrast of an image, and therefore, is likely to decrease during the daytime, when external light is strong, whereas such a problem with the latter is relatively small. With the above in mind, in this embodiment, a portion of information displayed in the meter portion **10,** particularly information having high importance and requiring high visibility, is displayed using an analog meter having a three-dimensional structure.

An external shape of the meter portion **10** when the meter portion **10** is viewed from the front of the display surface side is a closed loop similar to an ellipse. The external shape of the meter portion **10** is not limited to such an example. The external shape of the meter portion **10** when the meter portion **10** is viewed from the front may have generally a rectangular shape, or a shape that is a combination of a straight line and a curved line.

The meter panel unit **100** further includes a wall surface portion **20** fixed to the display surface side of the meter portion **10,** and a transparent cover **30** opposite the display surface of the meter portion **10.** Example configurations of the wall surface portion **20** and the transparent cover **30** will be described below.

The wall surface portion **20** surrounds the first analog meter **11,** the display element **13,** and the second analog meter **12** entirely along the peripheral edge of the meter portion **10.** The wall surface portion **20** may, for example, be formed of a plastic (synthetic resin). The wall surface portion **20** protrudes vertically (the positive direction of the Z axis) from the display surface of the meter portion **10.** The wall surface portion **20** does not necessarily need to be perpendicular to the display surface of the meter portion **10,** and may be tilted from the Z axis. In the present disclosure, the distance between the display surface of the meter portion **10** and an end on the front side of the wall surface portion **20** is referred to as a "height" of the wall surface portion **20.** In this embodiment, the height of the wall surface portion **20** is not uniform along the peripheral edge of the meter portion **10,** and may vary depending on the position on the peripheral edge.

In this embodiment, a rough shape of the wall surface portion **20** when the wall surface portion **20** is viewed from the front of the meter portion **10** is a closed loop such as an ellipse. In such a region surrounded by the wall surface portion **20,** or the inside of the wall surface portion **20,** a single, continuous, three-dimensional space surrounded by the inner wall surface of the wall surface portion **20** is formed.

As illustrated in FIG. **3****,** the wall surface portion **20** includes a portion having a relatively great height and a portion having a relatively small height. The portion having a relatively great height of the wall surface portion **20** includes a visor region **20A.** At least the visor region **20A** of the wall surface portion **20** has light-blocking properties. The visor region **20A** is arranged at a position above the display element **13** with the meter panel unit **100** attached to the work vehicle. The visor region **20A** of the wall surface portion **20** serves as eaves to reduce a decrease in the display visibility of the meter portion **10** caused due to external light such as sunlight shining on the display element **13** or the like. A height (greatest height) **Ha** of the visor region **20A** is at least 20 mm, preferably at least 35 mm, and more preferably at least 40 mm. When the wall surface portion **20** is viewed from the direction of the normal to the meter portion **10,** the visor region **20A** extends to the left and right across a range wider than the display element **13,** surrounding an upper half portion of each of the first analog meter **11** and the second analog meter **12.** The height of the visor region **20A** is greatest above the display element **13** and becomes smaller toward the left and right ends of the display element **13.**

The height of the wall surface portion **20** is relatively small at a position close to the lower end of the meter portion **10.** The smallest height of the wall surface portion **20** may, for example, be at most 5 mm, or may be 0 mm.

FIG. **3** also illustrates, in addition to the wall surface portion **20,** other structural components that are integral with the wall surface portion **20.** As described above, the wall surface portion **20** may be made of a plastic, and therefore, the wall surface portion **20** and other structural components can be produced simultaneously by a resin molding technique. Structural components other than the wall surface portion **20** of FIG. **3** are described below.

As illustrated in FIG. **4****,** the transparent cover **30** includes a front surface section **30A** including a concave surface **32,** and a side surface section **30B** extending from the peripheral edge of the front surface section **30A** along the outer side of the wall surface portion **20.** The side surface section **30B** of the transparent cover **30** can cover the outer side of the wall surface portion **20** along all the periphery thereof. The transparent cover **30** may, for example, be made of a colorless, transparent plastic (e.g., acrylic resin), or glass. In this embodiment, the front surface section **30A** and the side surface section **30B** of the transparent cover **30** are integrally formed together.

When the transparent cover **30** is viewed from the direction of the normal to the meter portion 10 with the meter panel unit **100** attached to the work vehicle, the front surface section **30A** of the transparent cover **30** is preferably tilted forward toward the operator. In the case in which the front surface section **30A** is tilted forward, when the operator sees the meter portion **10** through the transparent cover **30,** the operator's face and the background behind the operator are less likely to be reflected on the transparent cover **30.**

Because the front surface section **30A** of the transparent cover **30** has the concave surface **32,** when the operator sees the meter portion **10** through the transparent cover **30,** enlarged images of the operator and the background reflected by the transparent cover **30** are seen by the operator. This is because concave surface reflection occurs due to the front surface section **30A** of the transparent cover **30.** When information displayed by the meter portion **10** is represented by relatively small numerals, letters, graphics, or the like, the visibility of displayed information decreases as the spatial frequency of reflections on the transparent cover **30** decreases. According to this embodiment, such a decrease in visibility can be reduced.

The curvature ρ of the concave surface **32** of the transparent cover **30** is preferably uniform in each of the horizontal direction (the X-axis direction or the left-right direction) and the vertical direction (the Y-axis direction or the top-bottom direction). The curvature ρ determines the factor of magnification of a viewed image. As the curvature ρ is more uniform irrespective of direction, the concave surface **32** is closer to a portion of a sphere, and therefore, an enlarged image having a natural ratio is seen. It should be noted that the front surface section **30A** does not necessarily need to have a concave surface. For example, in the case in which the front surface section **30A** of the transparent cover **30** is covered with anti-reflection film, it is no longer necessary to address reflections, and therefore, the front surface section **30A** may be a flat surface or a convex surface.

The side surface section **30B** of the transparent cover **30** extends along the outer side of the wall surface portion **20.** Therefore, the side surface section **30B** has a height corresponding to the height of the wall surface portion **20.** For example, the height of a portion of the side surface section **30B** of the transparent cover **30** that covers the visor region **20A** of the wall surface portion **20** is greater than that of the other portion. A space delimited by the front surface section **30A** and the side surface section **30B** of the transparent cover **30** is referred to as an "inner space" of the transparent cover **30.** The shape and size of the inner space of the transparent cover **30** are great enough to accommodate substantially the entirety of the wall surface portion **20.** As described above, a single, continuous, three-dimensional space surrounded by the inner wall surface of the wall surface portion **20** is formed inside the wall surface portion **20.** A front side of this three-dimensional space is delimited and blocked by the transparent cover **30.** The outer side of the wall surface portion **20** may be in contact with the inner side of the side surface section **30B** of the transparent cover **30,** or a space may be provided therebetween.

It should be noted that condensation of water vapor existing in the "inner space" is likely to occur to fog the transparent cover **30.** In order to prevent such fogging, the surface of the transparent cover **30** may be coated with an antifogging agent. Alternatively, an antifogging effect can be obtained by providing a small opening in a portion of the meter portion **10** so that the inner space is in fluid communication with the outside. It should be noted that the transparent cover **30** does not need to be entirely transparent. For example, the side surface section **30B** does not need to be transparent.

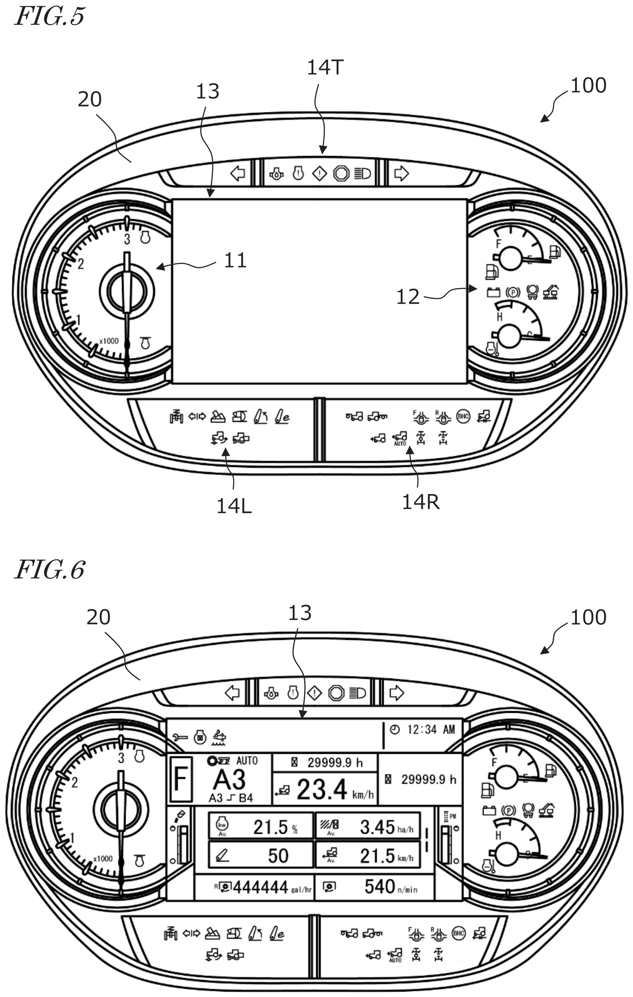

Next, an indicator region of the meter portion **10** will be described with reference to FIG. 5. In the example of FIG. **5****,** the meter portion **10** includes an indicator region **14T** provided above the display element **13,** and indicator regions **14L** and **14R** provided below the display element **13.** Various indicators are provided in each of the indicator regions **14T, 14L,** and **14R.** Each indicator presents predetermined information such as warning when a light emitting device such as a light emitting diode (LED) behind the indicator is on.

It should be noted that in this embodiment, two indicator regions **14L** and **14R** that are divided left and right are arranged below the display element **13,** but one indicator region that integrates the two indicator regions may be arranged.

Seeing the indicator region **14T,** which is positioned above the display element **13,** is less likely to be obstructed by the spokes **222A, 222B,** and **222C** of the steering wheel **220,** compared to the other indicator regions **14L** and **14R.** Therefore, it is preferable that indicators for indicating particularly important information (information having a higher warning level) (e.g., indicators for indicating the on/off state of the illumination device, turn signals, and warnings to the operator) be selected from a large number of indicators and arranged in the indicator region **14T.** The "warning level" of information displayed by an indicator may, for example, be specified in the manual of the work vehicle. For example, information such as the abnormality or failure of the engine and the on/off state of the headlamp has a higher warning level.

In this embodiment, each indicator arranged in the indicator region is composed of a light transmission region having a shape that defines a characteristic graphic (including icons and/or letters) and a light emitting device arranged behind the light transmission region. The indicator may be turned on/off by the light emitting device behind the indicator being turned on/off. One or two light emitting devices are arranged behind each indicator, for example.

Next, an example display of the display element **13** will be described with reference to FIG. **6****.** In the example of FIG. **6****,** the display region of the display element **13** is divided into several regions as described below. In each region, an "image" showing information such as the gear ratio, vehicle speed, function performance display, or hour meter is displayed. The images include various kinds of information represented by letters, numerals, graphics, icons, symbols, and the like. Various kinds of digital images may be indicated by different colors in order to increase the visibility. In particular, when the operator's attention should be attracted, display may be performed in which at least one of the positions, sizes, or colors of letters, numerals, graphics, icons, or symbols are changed and emphasized. When such emphasized display is performed, sound or speech may be emitted from an audio device such as a loudspeaker.

### <Communication ring and facing plate>

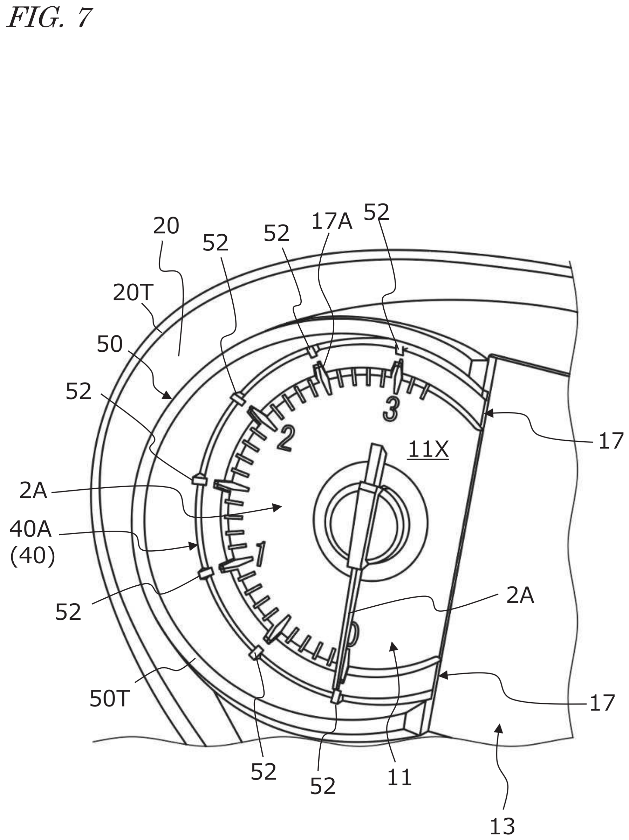

Next, an arc-shaped indicator (C-shaped communication ring) and a facing plate will be described with reference to FIGS. **7** to **9****.**

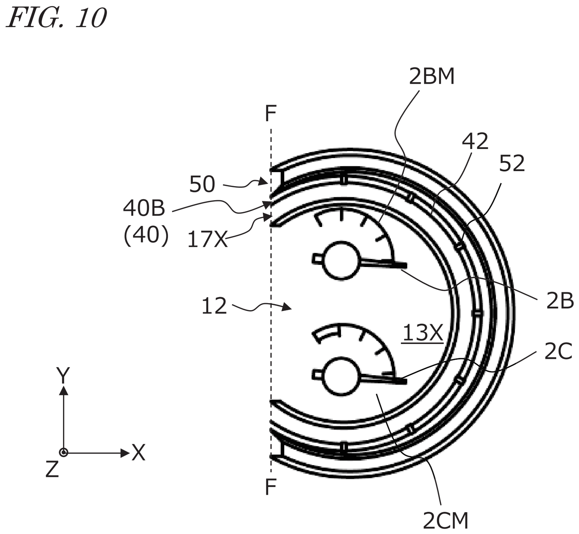

In this embodiment, the meter panel unit **100** includes a first arc-shaped indicator (communication ring) **40A** arranged around a sweep range **11X** of the pointer **2A,** and a second arc-shaped indicator **40B** (see FIG. **10**) arranged around sweep ranges of the pointers **2B** and **2C.** In the present disclosure, the term "arc" means a portion of a circle (circumference). The circle is not limited to a "perfect circle," and may include a portion whose curvature is gradually or locally changed like a portion of an ellipse.

The structure of the first arc-shaped indicator **40A** and the structure of the second arc-shaped indicator **40B** are symmetrical about a vertical line, and therefore, are collectively referred to as arc-shaped indicators **40.** The arc-shaped indicators **40** will be described below using the first arc-shaped indicator (communication ring) **40A** as an example, for the sake of simplicity.

As illustrated in FIG. **7****,** the meter panel unit **100** of this embodiment includes a facing plate **50** positioned outward of the arc-shaped indicator **40.** The facing plate **50** is formed of the same material (plastic) as that for the wall surface portion **20.** As illustrated in FIG. **3****,** the facing plate **50** is integral with the wall surface portion **20.** The facing plate **50** is in the shape of roughly an arc as viewed from the front. A height of an upper end **50T** of the facing plate **50** varies continuously from an end **50A** on the upper side to an end **50B** on the lower side, and is greatest at a middle position. The facing plate **50** is a curved wall rising from the meter portion **10.** A height of the visor region **20A** of the wall surface portion **20** from the meter portion **10** is greater than a height of the facing plate **50** from the meter portion **10.** In other words, the greatest height of the visor region **20A** from the meter portion **10** is greater than the greatest height of the facing plate **50** from the meter portion **10.**

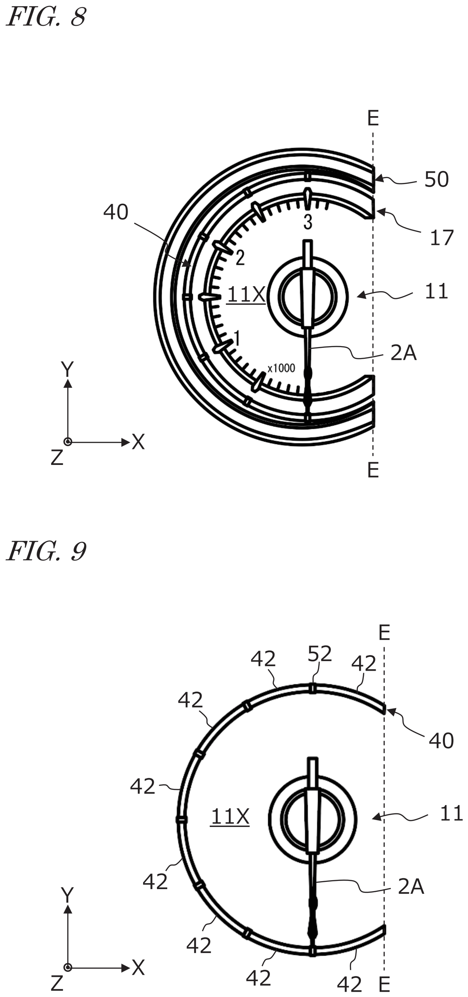

FIG. **8** is a front view illustrating a positional relationship between the first analog meter **11,** the arc-shaped indicator **40,** and the facing plate **50.** FIG. **9** is a front view mainly illustrating an example configuration of the arc-shaped indicator **40.** None of the first analog meter **11,** the arc-shaped indicator **40,** and the facing plate **50** extends rightward (the positive direction of the X axis) beyond a dashed line **E-E** of FIG. **8****.** The display element **13** is arranged rightward (in the positive direction of the X axis) of the dashed line **E-E**.

With such a configuration, while the length of the pointer **2A,** or the radius of the first analog meter **11,** is increased, an increase in the size in the horizontal direction (X-axis direction) of the first analog meter **11** can be reduced. This also holds true for the second analog meter **12.** It should be noted that as illustrated in FIG. **1B****,** when the size in the horizontal direction of the meter portion **10** is increased, the spokes **222A** and **222B** of the steering wheel **220** are more likely to obstruct seeing of the first and second analog meters **11** and **12.** Therefore, it is not preferable to increase the size in the horizontal direction of the meter portion **10.** In this embodiment, the analog meter is contained inside a shape surrounded by the dashed line **E-E** and an arc rather than a circle. Therefore, even for the meter portion **10,** which has a limited size in the horizontal direction, the size in the horizontal direction (X-axis direction) of the display element **13** can be increased while the visibility of the first and second analog meters **11** and **12** is increased. In addition, because the first and second analog meters **11** and **12** and the display element **13** are separated from each other by a straight line, the display area for analog information and the display area for digital information can be clearly separated from each other, and therefore, the visibility of both analog information and digital information can be improved.

In order to obtain the above effect, it is preferable that the central angle of the "arc" of the arc-shaped indicator **40** (**40A**), which is arranged, surrounding the first analog meter 11, be greater than 180° and smaller than 270°. If the central angle of the "arc" is at most 180°, the visibility of the first analog meter **11** decreases. If the central angle of the "arc" is at least 270°, the effect of reducing the size in the horizontal direction (X-axis direction) of the first analog meter **11** is not sufficient. This also holds true for the arc-shaped indicator **40** (**40B**) surrounding the second analog meter **12.** In terms of design properties, it is preferable that the left and right arc-shaped indicators **40A** and **40B** be positioned symmetrically about a vertical line passing through the center of the display element **13.**

The arc-shaped indicator **40** has at least one light emitting region **42** between the sweep range **11X** of the pointer **2A** and the facing plate **50.** In the example of FIG. **9****,** a plurality of light emitting regions **42** are provided. In this example, each light emitting region **42** has a fine curved shape extending along an arc. The plurality of light emitting regions **42** are arranged in a sequence of arcs to form the arc-shaped indicator **40.** In the case in which the number of light emitting regions **42** is one, a single light emitting region **42** has an arc shape.

In the example illustrated in the Figure, the first analog meter **11** includes an arc-shaped scale **17** between the arc-shaped indicator **40** and the sweep range **11X** of the pointer **2A.** The scale **17** has a three-dimensional shape protruding from the display surface (raised scale). The scale **17** is formed of a plastic integrally with the wall surface portion **20** and the facing plate **50.** It should be noted that the scale **17** does not necessarily need to have a three-dimensional shape. The scale **17** desirably has a three-dimensional shape in terms of higher visibility.

Although the plurality of light emitting regions **42** included in the arc-shaped indicator **40** may each include a light emitting element (e.g., an LED or OLED), in this embodiment the plurality of light emitting regions **42** are configured with a plurality of light transmission regions provided on the display surface of the meter portion **10** (i.e., the surface on the front side of the housing of the meter portion **10**) and at least one light emitting device arranged behind the plurality of light transmission regions.

The plurality of light emitting devices may include a plurality of LEDs that emit different colors. In this embodiment, the plurality of light emitting devices include an LED that emits red light, an LED that emits green light, and an LED that emits blue light. By causing these LEDs to selectively emit light, the arc-shaped indicator **40** can exhibit the function of notifying the operator of information using light having various colors. For example, all of the light emitting regions **42** of FIG. **9** can selectively emit red light, green light, and blue light. Alternatively, a light emitting device may be assigned to each of the plurality of light emitting regions **42,** and the plurality of light emitting devices may be caused to emit light separately, so that light beams can be sequentially emitted from the plurality of light emitting regions **42.**

### <Raised scale>

Next, the raised scale **17** will be described. As illustrated in FIGS. **7** and **8****,** the raised scale **17** extends in the shape of an arc inside the arc-shaped indicator **40** to form generally a C-shape. As illustrated in FIGS. **3** and **7****,** the raised scale **17** includes a plurality of notches **17A** arranged at predetermined intervals. The notch **17A** is a portion of the raised scale **17** whose width is locally reduced. The position of the notch **17A** corresponds to the position of a scale that is to be indicated by the tip of the pointer **2A** in the first analog meter **11.** The presence of the three-dimensional notches **17A** facilitates reading of scales by the operator.

As illustrated in FIG. **7****,** the facing plate **50** includes a plurality of protrusions **52** that protrude toward the sweep range **11X** of the pointer **2A.** The plurality of protrusions **52** are provided at the positions of the notches of the raised scale **17,** or in other words, positions aligned with the scales. Therefore, the notch **17A** of the raised scale **17** is recognized as a graphic integrated with the protrusion **52,** resulting in an improvement in the visibility of the scale. The plurality of protrusions **52** each extend across between the plurality of light emitting regions **42** of the arc-shaped indicator **40.** Therefore, the array of the plurality of light emitting regions **42** also corresponds to the array of the scales.

As can be seen from FIG. **3****,** the plurality of protrusions **52** serve as a bridge that connects the raised scale **17** to the facing plate **50.** The facing plate **50** is connected to the wall surface portion **20.** In this embodiment, the wall surface portion **20,** the facing plate **50,** and the raised scale **17** are integrally formed of a resin. The plurality of protrusions **52,** which extend from the facing plate **50,** delimit a boundary portion of the plurality of light emitting regions **42** in the arc-shaped indicator **40.**

Next, the second analog meter **12** and the second arc-shaped indicator **40B** will be described with reference to FIG. **10****.** The second arc-shaped indicator **40B** and the first arc-shaped indicator **40A** are symmetrical about a vertical line, and have substantially the same configuration. A facing plate (right facing plate) **50** is provided outward of the second arc-shaped indicator **40B.** The left facing plate **50** and the above facing plate (left facing plate) **50** are symmetrical about a vertical line.

Although an arc-shaped rib **17X** corresponding to the raised scale **17** is provided inside the second arc-shaped indicator **40B,** no notches are present in the arc-shaped rib **17X.** Protrusions (bridges) **52** are equally spaced and arranged between the arc-shaped rib **17X** and the right facing plate **50** so as to delimit a plurality of light emitting regions **42** included in the second arc-shaped indicator **40B.**

A sweep range **13X** of the second pointer **2B** and the third pointer **2C** is provided in a range surrounded by the second arc-shaped indicator **40B.** A rotational angle range **2BM** of the second pointer **2B** and a rotational angle range **2CM** of the third pointer **2C** have a similar or congruent outer shape.

With such a configuration, scales can be intuitively read based on the movements of the second pointer **2B** and the third pointer **2C,** and are less likely to be erroneously read.

### <Information display system>

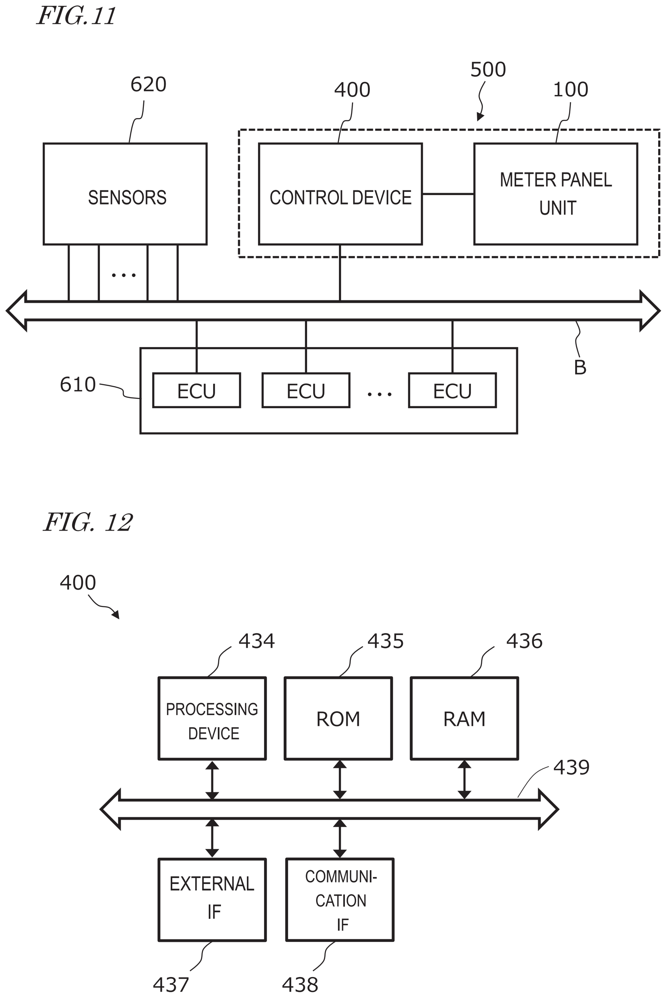

An information display system **500** according to an embodiment of the present disclosure will be described below with reference to FIGS. **11** to **14****.** FIG. **11** is a block diagram schematically illustrating an example configuration of the information display system **500** in an embodiment of the present disclosure. The information display system **500** includes the above meter panel unit **100,** and a control device **400** that controls the meter panel unit **100.** The control device **400** may include an electronic control unit (ECU) arranged in the work vehicle. The information display system **500** may further include an audio device such as a buzzer or a speaker.

The information display system **500** is communicably connected via a bus B to ECUs **610** and sensors **620** included in the work vehicle. The ECUs **610** may be collectively referred to as a "vehicle control device." In the present specification, various ECUs included in the work vehicle are referred to as "vehicle ECUs," and an ECU in the control device **400** included in the information display system **500** is referred to as a "meter ECU" to distinguish between the two. Various vehicle ECUs and the meter ECU can communicate with each other according to a vehicle bus standard such as CAN (controller area network), for example. For example, one vehicle ECU among the ECUs **610** included in the work vehicle receives signals from other vehicle ECUs and sensor data output from each sensor included in the sensors **620,** and instructs the meter ECU to display warning messages as described below or to turn on/off/blink indicators according to the state of the work vehicle. The meter ECU receives instructions from the vehicle ECU and causes warning messages to be displayed in the display region or causes indicators to be turned on or off, or to blink.

In FIG. **11****,** illustration of wiring other than the wiring of the bus **B** is simplified. However, for example, there may be wiring for directly transmitting signals from one or more sensors included in the sensors **620** included in the work vehicle to the control device **400,** or wiring connecting an input device described below and the control device **400.** In addition, there is power supply wiring for supplying power from a battery to each of the meter panel unit **100,** the control device **400,** the ECUs **610,** and the sensors **620** of the work vehicle.

FIG. **12** is a block diagram illustrating an example hardware configuration of the control device **400.** The control device **400** includes a processing device **434,** a read only memory (ROM) **435,** a random access memory (RAM) **436,** an external I/F **437,** and a communication I/F **438.** These components are interconnected via a bus **439.**

The processing device **434** is a device including one or more semiconductor integrated circuits (e.g., processors). A processor is also referred to as a central processing unit (CPU) or a microprocessor. The processor sequentially executes computer programs stored in the ROM **435** to realize various processes necessary for image display. The processor is broadly interpreted as a term including a field programmable gate array (FPGA) equipped with a CPU, a graphics processing unit (GPU), an application specific integrated circuit (ASIC), or an application specific standard product (ASSP).

The ROM **435** is, for example, a writable memory (e.g., PROM), a rewritable memory (e.g., flash memory), or a read-only memory. The ROM **435** stores programs that control the operation of the processor. The ROM **435** does not need to be a single recording medium and may be a collection of multiple recording media. A portion of the multiple collections may be removable memory.

The RAM **436** provides a working area for temporarily expanding programs stored in the ROM **435** at boot time. The RAM **436** does not need to be a single recording medium and may be a collection of multiple recording media.

The external I/F **437** is an interface for connecting the meter panel unit **100** to external devices. Examples of the external I/F **437** include a universal serial bus (USB) interface and digital or analog video interfaces.

The communication I/F **438** is an interface to perform communication between the control device **400** and other electronic components or ECUs. For example, the communication I/F **438** can perform wired communication in accordance with various protocols. The communication I/F **438** may perform wireless communication in accordance with Bluetooth^{®} standards and/or Wi-Fi^{®} standards. Both standards include wireless communication standards using frequencies in the 2.4 GHz band.

The control device **400** may further include a storage device. The storage device may be, for example, a semiconductor memory, a magnetic storage device, or an optical storage device, or a combination thereof.

The ECUs **610** included in the work vehicle include, for example, an ECU for speed control, an ECU for steering control, and an ECU for implement control. When the work vehicle (e.g., tractor) is configured to travel by automatic driving, the ECUs 610 may further include an ECU for automatic driving control. The ECU for automatic driving control performs calculations and control for realizing automatic driving based on data output from various sensors mounted on the vehicle body.

The sensors **620** may include, for example, a temperature sensor, an illuminance sensor, a fuel sensor, a water temperature sensor, an oil level gauge, an engine rotation sensor, a vehicle speed sensor, a battery voltage sensor, a shuttle sensor, a hand accelerator sensor, an accelerator pedal sensor, a main transmission lever sensor, a sub-transmission lever sensor, a seat belt sensor, a PM sensor, an acceleration sensor, an angular velocity sensor, an inertial measurement unit (IMU), a geomagnetic sensor, an imaging device, a LiDAR sensor, an ultrasonic sensor, an obstacle contact sensor, and a global navigation satellite system (GNSS) receiver.

The control device **400** of the information display system **500** may be an integrated circuit device mounted on a substrate inside the meter panel unit **100,** or may be an external integrated circuit device externally attached to the meter panel unit **100.** Furthermore, some or all of the functions of the control device **400** may be realized by one or more vehicle ECUs. Alternatively, some or all of the functions of the control device **400** may be realized by one or more servers (computers) connected via the communication I/F **438** through a communication network. In this way, one or more vehicle ECUs and/or one or more servers may cooperate with the control device **400** to realize various functions required for the information display system **500.** In this case, the vehicle ECU and/or the server function as portion of the information display system **500.**

In the information display system **500** of this embodiment, the control device **400** is configured to cause the arc-shaped indicator **40** to display information before causing the display element **13** to display various kinds of information when the work vehicle is started. This allows information that the operator should know in the first place to be presented to the operator with higher priority at startup. Such information has information indicating a state (a state classified as abnormality in traveling or working) of the work vehicle. The control device **400** is also configured to change the color of emitted light according to contents of information. For example, the control device **400** may be configured to emit blue light from the arc-shaped indicator **40** when an abnormality does not arise during starting, and to emit red light indicating an abnormality immediately after starting if a problem is expected to arise during traveling. Examples of a cause for a problem that will arise during traveling include an abnormal voltage of a battery, an abnormal pressure of an engine oil, abnormal heating of an engine, and an abnormality in a brake system. It should be noted that the color of the emitted light is not limited to blue or red, and may be green.

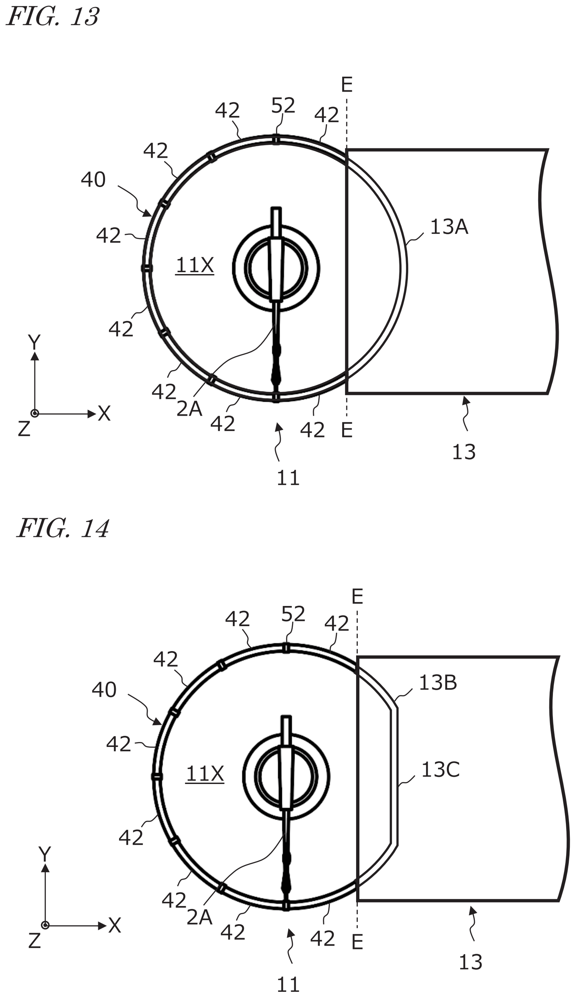

Furthermore, in this embodiment, the control device **400** is configured to cause the display element **13** to display a curved line-shaped image positioned on an extension line of the arc. FIG. **13** is a front view schematically illustrating an example in which an arc **13A** having the same color as that of light emitted from the light emitting region **42** of the arc-shaped indicator **40** is displayed. In FIG. **13****,** as an example, an arc **13A** having the same center as that of the arc of the arc-shaped indicator **40** is displayed. FIG. **14** is a front view schematically illustrating an example in which an arc **13B** having the same color as that of light emitted from the light emitting region **42** of the arc-shaped indicator **40,** and a second object **13C** having another shape and having an arc having the same color, are displayed. In the example of FIG. **14****,** the second object **13C** is a straight line portion. The control device **400** causes the display element **13** to display the concentric arc **13B** with the arc of the light emitting region **42,** and the straight line portion connected to the arc 13B. The straight line portion extends in parallel with a straight line forming the boundary between the first analog meter **11** and the display element **14** (corresponding to a dashed line **E-E** of FIG. **14**). By providing such display, a portion of the circle surrounding the first analog meter **11** that is cut away by the dashed line **E-E** is seen as a portion of the first analog meter **11** by the operator, and therefore, the operator can feel that the first analog meter **11** is large. In addition, an image that is displayed as if the image were a portion of the first analog meter **11** (hereinafter referred to as a "ring complementing image") may be partially hidden by information such as numerals or letters displayed on the display element **13.** Similarly to the shaped object **13C,** the portion of the arc **13B** may include a straight line shape. By including a straight line shape in the portion displayed on the display element **13,** a sharp design can be achieved.

The control device **400** can cause the display element **13** to display various images, which are not limited to the examples of FIGS. **13** and **14****,** in association with light emitted from the light emitting region **42** of the arc-shaped indicator **40.** The control device **400** can also cause the display element **13** to display various images in synchronization with the flickering of the light emitting region **42** of the arc-shaped indicator **40.** What is intended by the display of the arc-shaped indicator **40** to notify the operator can be more easily understood by the operator by emphasizing that display and the display of the display element **13** or associating these displays with each other.

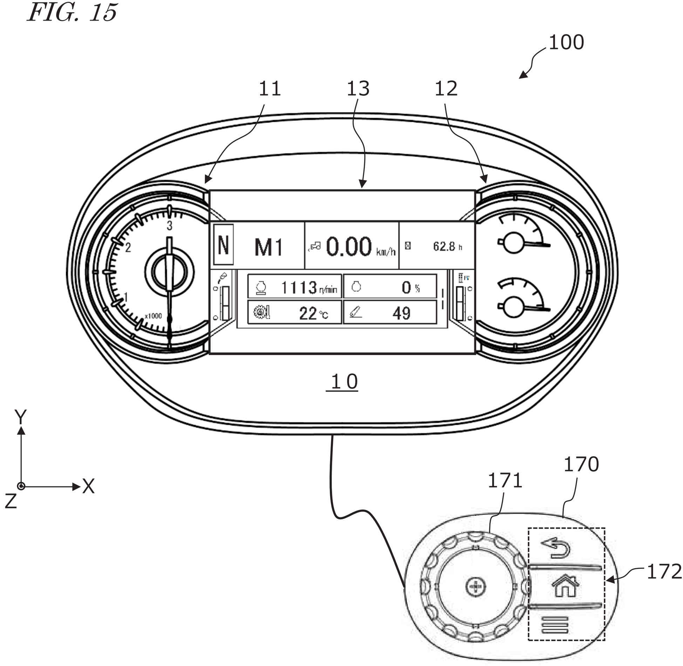

After startup of the meter panel unit **100,** a home screen is displayed in the display region of the display element **13.** FIG. **15** is a diagram illustrating an example of a home screen. Starting from the home screen, the user can perform operations to change the display of content on the display region or select various setting items using an input device described below.

In the example illustrated in FIG. **15****,** an input device **170** that enables interactive operations by the user is connected to the meter panel unit **100** via a communication cable. The input device **170** has, for example, a selector switch **171** such as a jog dial and an operation switch **172.** The input device **170** may be connected to the meter panel unit **100** wirelessly or by wire. Any device that accepts user operations can be used as the input device **170.** The input device **170** may be, for example, a rotary switch, a slide switch, a push button switch, a touch screen, a joystick, or a combination of two or more thereof.

The display element **13** includes a display region in which various images showing information about the work vehicle are displayed. Information about the work vehicle includes, for example, information related to an internal combustion engine (engine), the vehicle body, a PTO shaft, hydraulics/three-point hitch, and electrical equipment provided in the vehicle body. This information is information indicating the internal state of the vehicle system. Information related to the vehicle body includes, for example, information about the direction of travel of the vehicle, clutch, transmission, brakes, headland control, and cruise control. Furthermore, various content including, for example, camera images, radio setting screens, and audio setting screens may be displayed in the display region of the display element **13.**

### <Segmentation of display region>

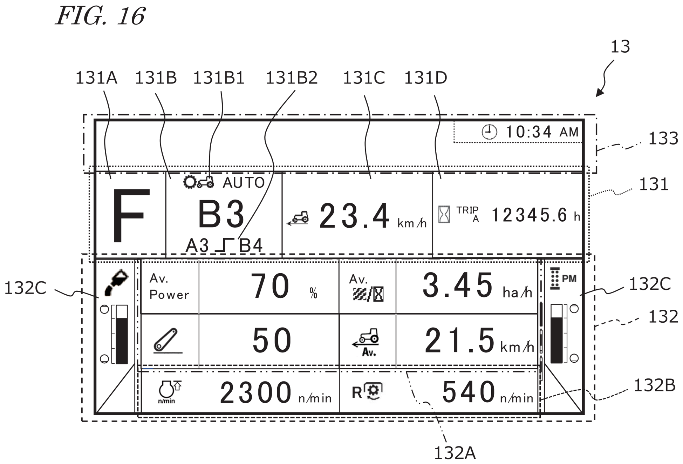

Next, segmentation of the display region will be described with reference to FIG. **16.** FIG. **16** is a diagram schematically illustrating an example of segmentation of the display region. The display region of the display element **13** is divided into multiple blocks. In other words, the display region of the display element **13** has multiple regions. The multiple regions in the example illustrated in FIG. **16** include a primary region **131,** a sub-region **132,** and an LCD indicator region **133.** The primary region **131** in FIG. **16** is a region surrounded by a dotted line in the display region of the display element **13.** The sub-region **132** is a region surrounded by a dashed line in the display region of the display element **13.** The LCD indicator region **133** is a region surrounded by a dash-dot line in the display region of the display element **13.** These three regions do not overlap with each other. It should be noted that the dashed lines, dotted lines, and dash-dot lines in FIG. **16** are partially overlapping for clarity.

The primary region **131** is a region to display images in the foreground (or front). The primary region **131** in the example illustrated in FIG. **16** is a rectangular region (or panel-shaped region). However, the external shape of the primary region **131** may be, for example, an ellipse or a Figure that is a combination of straight lines and curved lines. A primary image showing more important information (hereinafter referred to as "main information") among information about the work vehicle is displayed in the primary region **131.** The main information is information that the user should know with priority, and includes, for example, information indicating the direction of travel of the work vehicle, transmission state, and vehicle speed (hereinafter referred to as "vehicle speed").

The main information indicated by the primary image displayed in the primary region **131** in this way is displayed in the foreground of the display region. As illustrated in FIG. **15****,** the primary image is displayed in front of the ring complementing image. In this way, the primary image can appropriately convey main information to the user without being hidden by other images or content. Therefore, the visibility of main information having particularly high importance among various information is improved, and overlooking of main information is reduced.

In the example illustrated in FIG. **16****,** the primary region **131** has a belt-like shape extending in the horizontal direction. Multiple types of information about the travel state of the work vehicle are displayed in the primary region **131.** The primary region **131** is divided into multiple regions. In the example of FIG. **16****,** the primary region **131** is divided into a first region **131A,** a second region **131B,** a third region **131C,** and a fourth region **131D** arranged horizontally.

The first region **131A** positioned at the left end displays the state of the shuttle lever of the work vehicle, that is, the direction of travel. The first region **131A** displays, for example, information indicating whether the shuttle lever is in a forward (F), neutral (N), or reverse (R) state.

The second region **131B** positioned second from the left displays information about the transmission state, for example, setting of the gear stage of the work vehicle. In the example of FIG. **16****,** the current settings of the main transmission and sub-transmission are displayed as "B3" symbols in the second region **131B.** "B" indicates the setting stage of the sub-transmission, and "3" indicates the setting stage of the main transmission. The second region **131B** may display an icon **131B1** indicating that it is in automatic transmission mode and a range **131B2** of gear stages in the automatic transmission mode, as illustrated in FIG. **16****.**

The third region **131C** displays vehicle speed information. The control device **400** switches and displays vehicle speed information in kilometer units or mile units according to, for example, commands from the vehicle ECU.

The fourth region **131D** at the right end displays information other than the direction of travel, transmission state, and vehicle speed. In the example of FIG. **16****,** the fourth region **131D** displays the measured value of the hour meter, that is, the operating time of the work vehicle up to now. The fourth region **131D** may display other information, not limited to the measured value of the hour meter. For example, various information such as the upper limit setting value of engine speed or the target value of engine speed recorded in memory may be displayed in the fourth region **131D.** The control device **400** may be configured to dynamically change the display of the fourth region **131D** according to, for example, commands from the vehicle ECU. The fourth region **131D,** together with a region **132B** described below, dynamically displays the performance of travel and work of the work vehicle. Therefore, the fourth region **131D** is sometimes referred to as a "dynamic performance monitor region."

The sub-region **132** is positioned below the primary region **131.** Various content is displayed in the sub-region **132.** The sub-region **132** in the example illustrated in FIG. **16** is a rectangular region and is further divided into three types of regions. The sub-region **132** includes a performance monitor region **132A,** a dynamic performance monitor region **132B,** and two gauge regions **132C.**

The performance monitor region **132A** is the largest region among the three regions included in the sub-region **132** and is positioned toward the upper side of the sub-region **132.** The performance monitor region **132A** is sometimes referred to as the "upper region" in the sub-region **132.** The performance monitor region **132A** mainly displays one or more items selected by the user (hereinafter referred to as "selected items") from among various items showing various functional performance information. Examples of items that can be selected by the user include information about engine speed, engine speed upper limit setting value, engine speed memory value, fuel consumption, fuel efficiency, travel distance, load factor, PTO shaft rotation speed, slip rate, diesel particulate filter (DPF) regeneration, and work area.

The screen of selected items may be composed of multiple pages that can be advanced or returned by the user operating the input device. FIG. **16** shows an example of multiple selected items displayed on one page among multiple pages. In the example illustrated in FIG. **16****,** four selected items are displayed on one page. However, the number of selected items displayed on one page is not limited to four and may be, for example, two, three, or five or more.

The dynamic performance monitor region **132B** is positioned toward the lower side of the sub-region **132.** The dynamic performance monitor region **132B** is sometimes referred to as the "lower region" in the sub-region **132.** Various items showing the various functional performance information described above may be displayed in the dynamic performance monitor region **132B.** The display of information displayed in the dynamic performance monitor region **132B** may be controlled by the control device **400** (e.g., meter ECU) that receives commands from, for example, the vehicle ECU. The control device **400** may be configured to change the display of the dynamic performance monitor region **132B** in response to commands from the vehicle ECU. As illustrated in FIG. **16****,** for example, two items may be displayed in the dynamic performance monitor region **132B.** However, the number of items is not limited to two. Nothing may be displayed in the dynamic performance monitor region **132B** as illustrated in FIG. **15****.**

The gauge regions **132C** are positioned on the right and left sides of the sub-region **132.** The performance monitor region **132A** and the dynamic performance monitor region **132B** are positioned between the two gauge regions **132C** on the right and left. Gauge images including icons and scales may be displayed in each of the gauge regions **132C** on the right and left sides. Examples of gauge images include information about the remaining amount of diesel exhaust fluid (DEF), particulate matter (PM) accumulation, and tire air pressure.

The images displayed in the performance monitor region **132A** and the dynamic performance monitor region **132B** may be changed according to user operations using the input device. For example, camera images, images for radio or audio settings, front loader control, cylinder flow control, operation member settings, steering assist control, automatic steering control, and attachment work machine control, or launch images displaying a list of functional items may be displayed in a region corresponding to the entire performance monitor region **132A** and dynamic performance monitor region **132B.** By integrating two or more regions and using them as one region in this way, images and content can be displayed relatively large.

The LCD indicator region **133** is positioned above the primary region **131.** The LCD indicator region **133** in the example illustrated in FIG. **16** is a rectangular region like the primary region **131** and the sub-region **132.** The LCD indicator region **133** functions as a region to display information indicating the state of the work vehicle, warning information, maintenance-related information, and the like. For example, indicators that turn on when a warning state such as brake warning or fuel remaining warning should be issued and turn off when the state is resolved may be displayed in the LCD indicator region **133.** As another example, indicators that turn on periodically to prompt the user for maintenance such as DPF regeneration or engine oil change may be displayed in the LCD indicator region **133.** As a further example, indicators for requesting an increase or decrease in engine speed may be displayed in the LCD indicator region **133.** In the LCD indicator region **133,** no indicators are normally displayed, and a black background is displayed. When a state requiring display of warning or maintenance information arises, the indicator corresponding to that warning or maintenance information turns on. A maximum of, for example, about 10 indicators may be displayed in the LCD indicator region **133.** Since indicators can be displayed prominently against a black background, it is possible to make it easier for the operator or user to notice the occurrence of LCD indicators.

The LCD indicator region **133** is positioned below the indicator region **14T** illustrated in FIG. **5****.** The indicators arranged in the indicator region **14T** are hardware indicators that are turned on by light emitting devices such as LEDs. In contrast, the indicators displayed in the LCD indicator region **133** are turned on by drawing processing on the LCD. In this specification, hardware indicators using LEDs are referred to as "LED indicators," and indicators displayed in the LCD indicator region **133** are referred to as "LCD indicators," and the two may be distinguished.

A popup image including a message for notifying the user of the content of an abnormality or failure when, for example, an abnormality or failure of the engine or electrical equipment is detected, or a message for warning about the internal state of the vehicle system (hereinafter sometimes referred to as a "popup image") may also be displayed in the sub-region **132** illustrated in FIG. **16****.** In addition, popup images including messages indicating maintenance information may also be displayed in the sub-region **132.**

### <Content display in sub-region>

The information display system **500** in this embodiment is a system for work vehicles. The information display system **500** includes the meter panel unit **100** having the display element **13,** and the control device **400** that controls the meter panel unit **100.** The display element **13** has, as described with reference to FIG. **16****,** a display region including a primary region **131** to display a primary image indicating main information related to the work vehicle, and a sub-region **132** to display a plurality of content including information related to the work vehicle.

In this embodiment, the plurality of content displayed in the sub-region **132** is composed of a plurality of pages that can be advanced or returned by a user operation. Content page forwarding or page returning is performed by rotating the selector switch (dial) **171** of the input device **170** shown in FIG. **15** clockwise or counterclockwise. When the input device is a touch screen, content page forwarding or page returning may be performed by the user's screen scrolling operation. One of the plurality of pages (content) selected by the user is displayed in the display region. The user can perform such content switching, for example, on the home screen.

The control device **400** causes one of the plurality of pages selected by the user to be displayed in the sub-region **132** while displaying the primary image in the primary region **131.** In other words, the control device **400** generates the sub-region **132** on the display region and generates or draws content in the sub-region **132.** In this way, each of the multiple regions divided in the display region is a drawing region for drawing in a specific field on the display region.

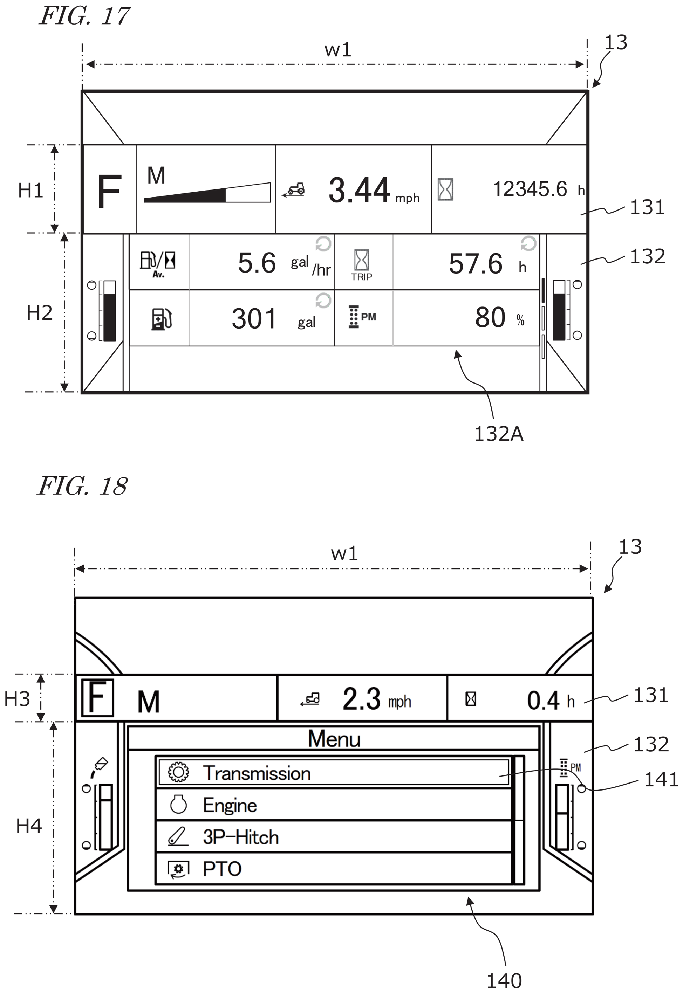

FIG. **17** is a schematic diagram illustrating an example of a home screen in which the primary region **131** and the performance monitor region **132A** are displayed. In the example of FIG. **17****,** a primary image is displayed in the primary region **131,** and an image of selected items showing various functional performance information is displayed in the performance monitor region **132A.** As described above, the primary region **131** is positioned in the upper portion of the display region, and the sub-region **132** is positioned in the lower portion of the display region. The control device **400** causes the primary image and images of the plurality of content to be displayed in the foreground. As a result, the primary image and the image of selected items are displayed in the foreground of the home screen. From this state, the content displayed in the sub-region **132** is switched by the user's page forwarding or page returning operation.

FIG. **17** shows an example of multiple selected items displayed on one page among multiple pages. In the example illustrated in FIG. **17****,** four selected items are displayed on one page. However, the number of selected items displayed on one page is not limited to four and may be, for example, two, three, or five or more.

The performance monitor region **132A** is the largest region among the three regions included in the sub-region **132** and is positioned toward the upper side of the sub-region **132.** The performance monitor region **132A** mainly displays selected items from among various items showing various functional performance information. Examples of items that can be selected by the user include information about engine speed, engine speed upper limit setting value, engine speed memory value, fuel consumption, fuel efficiency, travel distance, load factor, PTO shaft rotation speed, slip rate, diesel particulate filter (DPF) regeneration, and work area.

Next, examples of content that may be included in the plurality of content will be described with reference to FIGS. **18** to **22****.**

The plurality of content includes, for example, a menu image displaying various items, a setting image for setting various items included in the menu image, a launch image displaying a list of functional items, a camera image, an audio image to perform audio settings, and a radio image to perform radio settings.

FIG. **18** is a diagram schematically illustrating an example of a menu image **140.** The user can cause the menu image **140** to be displayed in the display region by, for example, operating the operation switch **172** of the input device **170** shown in FIG. **15** (for example, pressing a menu switch). The control device **400** can cause one of the plurality of pages selected by the user to be displayed in the sub-region **132** while displaying the primary image in the foreground. In the example shown in FIG. **18****,** the control device **400** causes the menu image **140** to be displayed in the sub-region **132** of the display region while displaying the primary image in the foreground, in response to an instruction from the input device **170.**

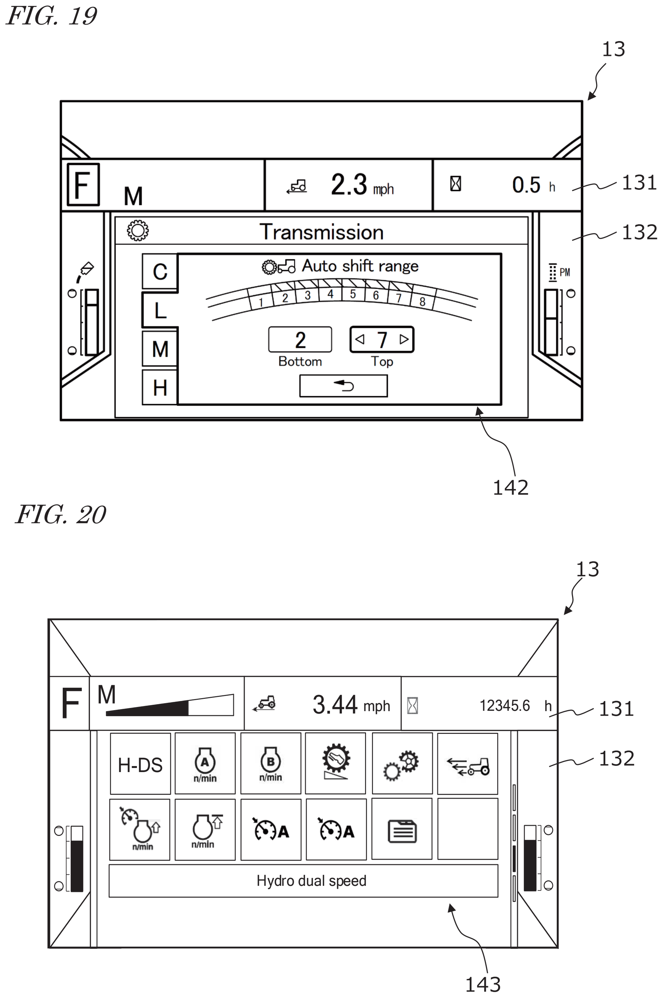

FIG. **19** is a diagram schematically illustrating an example of a setting image **142.** FIG. **19** illustrates a setting image **142** to perform transmission settings. When the transmission setting item **141,** which is one of the functional items shown in FIG. **18****,** is selected by user operation, a setting image **142** to perform transmission settings is displayed in the sub-region **132,** as shown in FIG. **19****.** The control device **400** may cause the setting image **142** to be displayed in the sub-region **132** of the display region while displaying the primary image in the foreground, in response to an instruction from the input device **170.** In other words, the control device **400** may switch the content to be displayed in the sub-region **132** from the menu image **140** to the setting image **142.**

FIG. **20** is a diagram schematically illustrating an example of a launch image **143.** From the home screen shown in FIG. **17****,** the user can switch the content to be displayed in the sub-region **132** to the launch image **143** by, for example, performing a page forwarding operation. The control device **400** may cause the launch image **143** to be displayed in the sub-region **132** of the display region while displaying the primary image in the foreground, in response to an instruction from the input device **170.** When the user selects one item from the list of functional items displayed in the launch image **143,** an image including setting information or information about the work vehicle for the selected item is displayed in the sub-region **132.**

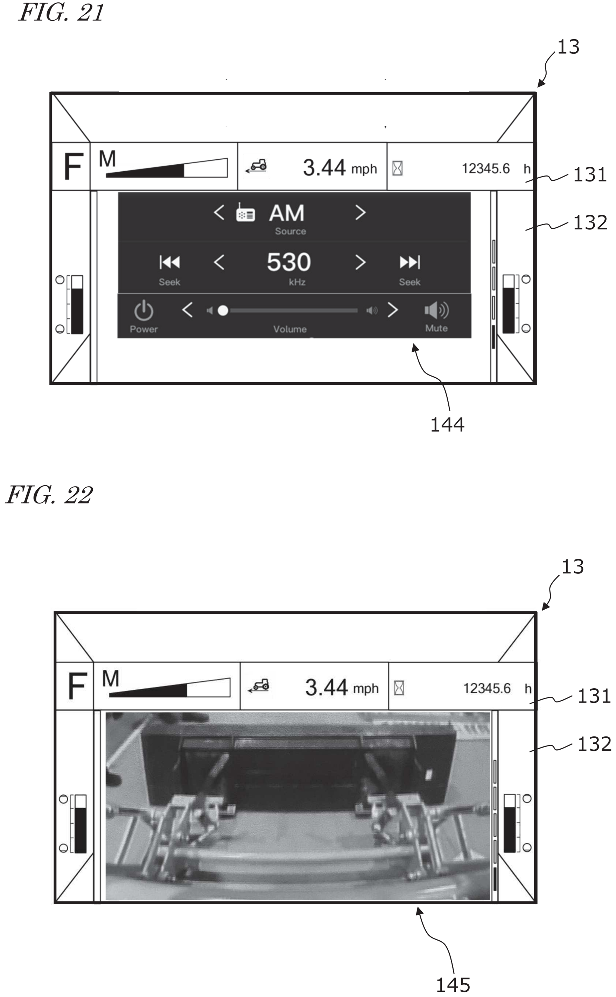

FIG. **21** is a diagram schematically illustrating an example of a radio image **144** to perform radio settings. The information display system **500** may exhibit functions to perform audio playback and/or radio playback. Such functions are implemented in the control device **400.** From the screen shown in FIG. **19****,** the user can switch the content to be displayed in the sub-region **132** to the radio image **144** by, for example, performing a page forwarding operation. Although not shown, the user can switch the content to be displayed in the sub-region **132** from the radio image **144** to an audio image, or vice versa, by performing page forwarding or page returning operations. The control device **400** may cause the radio image **144** or audio image to be displayed in the sub-region **132** of the display region while displaying the primary image in the foreground, in response to an instruction from the input device **170.**

FIG. **22** is a diagram schematically illustrating an example of a camera image **145.** The control device **400** may be connected to one or more cameras mounted on the work vehicle via the external I/F **437** described above. The one or more cameras include, for example, a front camera that captures the front of the work vehicle, and a rear camera that captures the rear of the work vehicle. By connecting the front camera and rear camera to the control device **400** via the external I/F **437,** it is possible to display video (that is, camera images) captured by each of the front camera and rear camera in the display region. From the screen shown in FIG. **21****,** the user can switch the content to be displayed in the sub-region **132** to the camera image **145** by, for example, performing a page forwarding operation. The control device **400** may cause the camera image **145** to be displayed in the sub-region **132** while displaying the primary image in the foreground, in response to an instruction from the input device **170.**

Information that the user wants to know or obtain during driving or agricultural work may change depending on the driving or work situation. In this embodiment, it is possible to easily switch various content by operating the input device while displaying the primary image indicating main information in the foreground. This makes it possible to provide information that the user wants to know or obtain while presenting main information to the user.

The control device **400** in this embodiment may dynamically change the sizes of the primary region **131** and the sub-region **132** according to the type of content to be displayed in the display region. In other words, the control device **400** may enlarge or reduce the size of each of the primary region **131** and the sub-region **132** according to the type of content to be displayed in the display region. The term "size" in this embodiment mainly refers to the vertical height or area of a region. The plurality of content described above includes first-type content and second-type content. When the content to be displayed in the sub-region **132** is second-type content, the control device **400** may reduce the size of the primary region **131** and enlarge the size of the sub-region **132,** and display the primary image and content in the primary region **131** and the sub-region **132,** respectively. In this way, it is possible to display the second-type content relatively large in the sub-region while presenting main information to the user through the main image.

First-type content mainly relates to display of setting values of each functional item, and includes, for example, images of selected items showing various functional performance information illustrated in FIG. **17****.** Second-type content mainly relates to displays other than display of setting values of each functional item, and includes, for example, the menu image illustrated in FIG. **18****,** the setting image illustrated in FIG. **19****,** the launch image illustrated in FIG. **20****,** the radio image illustrated in FIG. **21****,** the camera image illustrated in FIG. **22****,** and audio images.

In one aspect, when causing first-type content selected by the user from among the plurality of content to be displayed in the sub-region, the control device **400** causes the primary image to be displayed in the primary region **131** and the first-type content to be displayed in the sub-region **132** with the primary region **131** having a first size and the sub-region **132** having a second size. Alternatively, when switching the content to be displayed in the sub-region **132** from second-type content to first-type content, the control device **400** causes the primary image to be displayed in the primary region **131** and the first-type content to be displayed in the sub-region **132** with the primary region **131** enlarged and the sub-region **132** reduced.

In the example of FIG. **17****,** the primary region **131** having the first size and the sub-region **132** having the second size are shown. The horizontal (width) direction size of the primary region **131** having the first size is W1, and the vertical (height) direction size is H1. The horizontal direction size of the sub-region **132** having the second size is W1, and the vertical direction size is H2. Height H1 is smaller than height H2.

When causing second-type content selected by the user from among the plurality of content to be displayed in the sub-region **132,** the control device **400** causes the primary image to be displayed in the primary region **131** and the second-type content to be displayed in the sub-region **132** with the primary region **131** having a third size smaller than the first size and the sub-region **132** having a fourth size larger than the second size. Alternatively, when switching the content to be displayed in the sub-region **132** from first-type content to second-type content, the control device **400** causes the primary image to be displayed in the primary region **131** and the second-type content to be displayed in the sub-region **132** with the primary region **131** reduced and the sub-region **132** enlarged.

In the example of FIG. **18****,** the primary region **131** having the third size and the sub-region **132** having the fourth size are shown. In the examples of FIG. **19,** FIG. **20****,** FIG. **21,** or FIG. **22****,** the primary region **131** having the third size and the sub-region **132** having the fourth size are also shown. The horizontal (width) direction size of the primary region **131** having the third size is W1, and the vertical (height) direction size is H3. The horizontal direction size of the sub-region **132** having the fourth size is W1, and the vertical direction size is H4. Height H3 is smaller than height H4. Also, height H1 shown in FIG. **17** is greater than height H3 shown in FIG. **18****,** and height H2 shown in FIG. **17** is smaller than height H4 shown in FIG. **18****.**

The control device **400** in this embodiment changes the size of the primary region **131** from the first size to the third size, or changes the size of the primary region **131** from the third size to the first size, while maintaining the content included in the primary image. This makes it possible to maintain the main information indicated by the main image between before and after enlargement of the primary region **131,** or between before and after reduction.

It should be noted that in the examples shown in FIGS. **17** and **18****,** the horizontal direction size of the primary region before enlargement (or after reduction) and the horizontal direction size of the primary region after enlargement (or before reduction) are the same, but they may be different. Specifically, the horizontal direction size of the primary region before enlargement (or after reduction) shown in FIG. **18** may be smaller than the horizontal direction size of the primary region after enlargement (or before reduction) shown in FIG. **17****.**

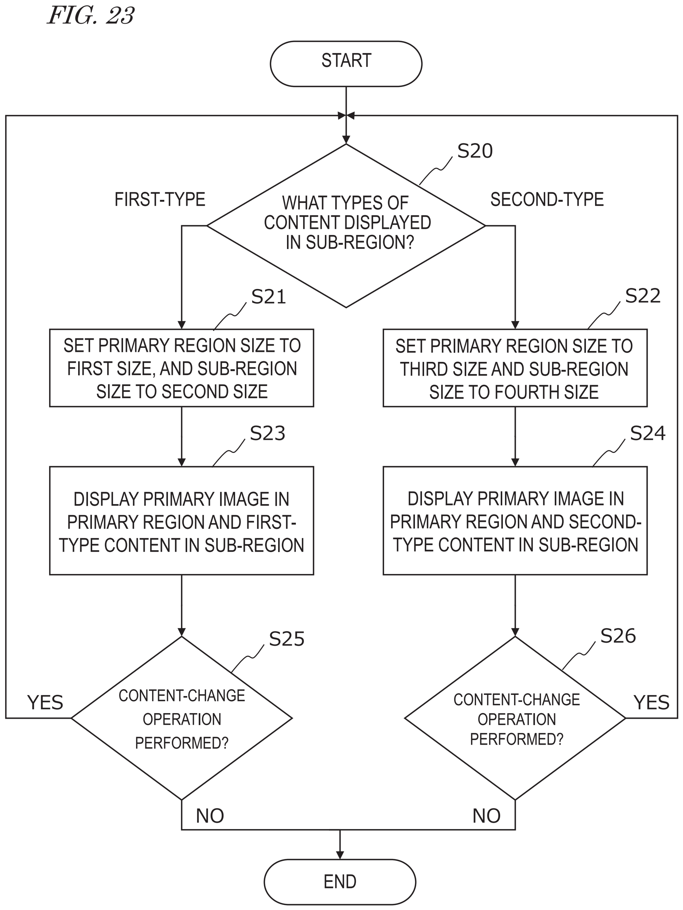

FIG. **23** is a flowchart illustrating a procedure for changing the sizes of the primary region **131** and the sub-region **132** according to the type of content to be displayed in the sub-region **132.** When the content selected by the user, that is, the type of content to be displayed in the sub-region **132,** is the first type (first type in step S20), the control device **400** sets the size of the primary region **131** to the first size and the size of the sub-region **132** to the second size (step S21). Then, the control device **400** causes the primary image to be displayed in the primary region **131** and causes the first-type content to be displayed in the sub-region **132** (step S23). Thereafter, if there is a content change operation by the user, the process returns to step S20 (YES in step S25), and if there is no content change operation by the user, the process ends (NO in step S25).

When the content selected by the user, that is, the type of content displayed in the sub-region **132,** is the second type (second type in step S20), the control device **400** sets the size of the primary region **131** to the third size and the size of the sub-region **132** to the fourth size (step S22). Then, the control device **400** causes the primary image to be displayed in the primary region **131** and causes the second-type content to be displayed in the sub-region **132** (step S24). Thereafter, if there is a content change operation by the user, the process returns to step S20 (YES in step S26), and if there is no content change operation by the user, the process ends (NO in step S26).

The control device **400** repeatedly executes the processes from step S20 to step S26 until the user's content change operation is completed.

According to such a display method by content switching, when displaying second-type content such as a menu screen or launch image, by reducing the primary region **131** and enlarging the sub-region **132,** it is possible to display content relatively large within the limited size display region while presenting main information to the user in the primary region **131.** This can improve the visibility of content and the operability of the screen by the user.

The information display systems in the above embodiments can also be retrofitted to work vehicles that do not have these functions. Such systems may be manufactured and sold independently of work vehicles. Computer programs used in such systems may also be manufactured and sold independently of work vehicles. Computer programs may be provided, for example, stored on computer-readable non-transitory storage media. Computer programs may also be provided by download via telecommunication lines (e.g., the Internet).

### INDUSTRIAL APPLICABILITY

The technologies of the present disclosure are widely applicable to various types of work vehicles used in, for example, smart agriculture.

### REFERENCE SIGNS LIST

**10** meter portion, **11** first analog meter, **12** second analog meter, **13** display element, **14T** indicator region, **14L** indicator region, **14R** indicator region, **17** raised scale, **20** wall surface portion, **30** transparent cover, **30A** front surface section of transparent cover, **30B** side surface section of transparent cover, **40** arc-shaped indicator, **50** facing plate, **100** meter panel unit, **400** control device, **500** information display system

## Claims

1. An information display system for a work vehicle, comprising:
a meter panel unit including a display element; and
a control device configured to control the meter panel unit,
wherein
the display element includes a display region including a primary region to display a primary image indicating main information related to the work vehicle, and a sub-region to display a plurality of content including information related to the work vehicle,
the plurality of content is composed of a plurality of pages that can be advanced or returned by a user operation, and
the control device causes one of the plurality of pages selected by the user to be displayed in the sub-region while displaying the primary image in the primary region.

2. The information display system of claim 1, wherein the primary region is positioned in an upper portion of the display region, and the sub-region is positioned in a lower portion of the display region.

3. The information display system of claim 1 or 2, wherein the control device causes the primary image and images of the plurality of content to be displayed in a foreground.

4. The information display system of claim 1 or 2, wherein the main information includes information indicating a direction of travel, a transmission state, and a vehicle speed of the work vehicle.

5. The information display system of claim 1 or 2, wherein the plurality of content includes a menu image displaying various items, a setting image to set various items included in the menu image, a launch image displaying a list of functional items, a camera image, an image to perform audio settings, and an image to perform radio settings.

6. The information display system of claim 1 or 2, wherein the meter panel unit includes first and second analog meters each including a pointer, and the display element is provided between the first and second analog meters.

7. A work vehicle comprising the information display system of claim 1 or 2.

8. A computer-implemented display method to display an image on a display element of a meter panel unit for a work vehicle, wherein the display element includes a display region including a primary region to display a primary image indicating main information related to a work vehicle, and a sub-region to display a plurality of content including information related to the work vehicle, and the plurality of content is composed of a plurality of pages that can be advanced or returned by a user operation, the method comprising:
displaying the primary image in the primary region; and
displaying one of the plurality of pages selected by the user in the sub-region while displaying the primary image in the primary region.

9. A computer program executable by a computer to cause a display element of a meter panel unit for a work vehicle to display an image, wherein the display element includes a display region including a primary region to display a primary image indicating main information related to a work vehicle, and a sub-region to display a plurality of content including information related to the work vehicle, and the plurality of content is composed of a plurality of pages that can be advanced or returned by a user operation, the computer program causing the computer to perform:
causing the primary image to be displayed in the primary region; and
causing one of the plurality of pages selected by the user to be displayed in the sub-region while displaying the primary image in the primary region.
